# EUROPEAN PATENT SPECIFICATION

(11) **EP 2 043 899 B1**
(45) Date of publication and mention of the grant of the patent: **31.10.2012**
(21) Application number: 07715984.6
(22) Date of filing: 22.02.2007
(51) Int. Cl.: B62B 1/10, B62B 1/18, B65F 1/06, B62B 1/14, B65F 1/00

(54) **PORTABLE CONTAINER**
TRAGBARER BEHÄLTER
CONTENEUR PORTABLE

(30) Priority: 20.07.2006 NZ 54864006
(43) Date of publication of application: 08.04.2009
(73) Proprietor: EUROBIN 2007 LIMITED, Auckland (NZ)
(72) Inventor: Boustred, Graham Hubert, Manakau (NZ)
(74) Representative: Bhimani, Alan
(86) International application number: PCT/NZ2007/000032
(87) International publication number: WO 2008/010727

(56) References cited:
- WO-A1-91/05720
- DE-A1- 19 821 434
- GB-A- 2 384 970
- US-A- 3 937 259
- US-A- 4 962 973
- US-B1- 6 170 839

## Description

### TECHNICAL FIELD OF THE INVENTION

The invention relates generally to a portable container for storing goods, and more specifically a portable container having multiple storage compartments for storing goods.

### BACKGROUND OF THE INVENTION

Portable containers for storing and moving goods have been around for hundreds of years. For instance, many portable containers have been developed for transporting rubbish and recyclables to the curb for pick up. Typically, these portable containers are large garbage containers containing only a single compartment. The portable container has a set of wheels for rolling the portable container to the curb and a removable lid forming a top of the compartment. Garbage is placed in a garbage bag that lines the compartment, and when filled, or on a scheduled basis, the portable container is wheeled to the curb. The garbage bag must then be lifted up and out of the compartment, potentially straining and/or injuring the back of the user, and placed on the curb. The user must then walk back to the house, and drag or carry a recycling bin or bins containing glass, cans, newspapers, and/or plastic out to the curb in a separate trip.

Although effective, such previously developed portable containers are not without their problems. First, multiple containers must be used and stored. The containers take up a large amount of floor space in a person's house or garage. Second, the various containers must be lifted and moved separately, and the garbage bag must be lifted up and out of the compartment, a cumbersome and potentially injury causing manoeuvre, and potentially an impossible task for those of limited mobility.

A portable container according to claim 1, with the exception of not comprising a removable lower compartment defining a first space, is disclosed in DE 198 214 34 A1.

Accordingly, there exists a need for an improved portable container that has multiple compartments for storing goods in a space efficient manner, provides a barrier to odours, impedes vermin access, and/or which reduces the labour involved in unloading goods from the compartments.

### OBJECT OF THE INVENTION

It is an object of the invention to provide a portable container that ameliorates some of the disadvantages and limitations of the known art or at least provide the public with a useful choice.

### SUMMARY OF THE INVENTION

A portable container formed in accordance with the present invention as defined in claim 1 or 11 is provided. The portable container may include a frame and a wheel assembly for supporting the frame upon a surface to permit the frame to be rolled upon the surface. The portable container may include a lower compartment defining a first space adapted to store objects and an upper compartment. The upper compartment may be disposed above the lower compartment and define a second space adapted to store objects. The upper compartment may have a door moveable between a closed position in which the door defines a boundary of the second space and an open position. In the open position, the door is adapted to be a ramp extending from the upper compartment to the surface to permit objects stored in the upper compartment to be slid down the ramp to the surface.

The portable container may include a track assembly for removably coupling the lower compartment to the frame thereby permitting the lower compartment to be slid outward from a stowed position in which the lower compartment is disposed underneath the upper compartment to a detached position in which the lower compartment is detached from the frame to be moveable separately from the frame. The track assembly may include a support track. The lower compartment may include a bin having an open top with a lip projecting outward from a periphery of the open top, wherein the lip is adapted to slidably interface with the support track during transition of the lower compartment from the stowed position to the detached position.

The upper compartment may include a second door moveable between a closed position in which the second door defines a boundary of the second space and an open position permitting access to the second space. The first door may be pivotally coupled to the upper compartment. The upper compartment may include a bag hanger assembly disposed within the second space, the bag hanger assembly including at least a first catch spaced from a second catch. The first and second catches may each be adapted to engage and support a handle of a bag to hold the bag in an open position in the second space. The portable container may include an auxiliary storage compartment coupled to the frame, the auxiliary storage compartment defining a third space for storing goods. The lower compartment may be a bin having an open top. A bottom of the upper compartment may be adapted to be disposed over the open top to close the open top and block access to the lower compartment through the open top. Preferably, the bin, when in a stowed position in the portable container, projects outward from a front surface of the portable container a predetermined distance such that items can be placed in the bin even when the bin is in the stowed position.

An alternate embodiment of a portable container may include a main storage space, a bin removably disposed below the main storage space, and a wheel assembly having one or more wheels for rollingly supporting the main compartment upon a ground surface. The portable container may further include a door positionable between a closed position forming a wall of the main compartment and a ramp position adapted to provide a ramp extending from a bottom surface of the main compartment to the ground surface. The ramp may be adapted to permit contents of the main compartment to be slid down the ramp from a bottom surface of the main compartment to the ground surface.

### BRIEF DESCRIPTION OF THE DRAWINGS

The invention will now be described, by way of example only, by reference to the accompanying drawings:
- **Figure 1**: is a perspective view of a side of one embodiment of a portable container formed in accordance with the present invention;
- **Figure 2**: is a perspective view of a lower compartment of the portable container being removed;
- **Figure 3**: is a perspective view of a top door of an upper compartment of the portable container being opened to gain access to the upper compartment;
- **Figure 4**: is a perspective view of a front door of the upper compartment being opened to permit a garbage bag to be slid down a ramp formed by the opened front door;
- **Figure 5**: is a perspective view of the garbage bag being slid down the ramp formed by the opened front door;
- **Figure 6**: is a front elevation view of a portion of the front of the portable container showing how the lower compartment is coupled to a frame of the portable container;
- **Figure 7**: is a perspective view of a rear the portable container showing several auxiliary storage compartments attached to a frame of the portable container for storing additional items; and
- **Figure 8**: is a perspective view of a rear of an alternate embodiment of a portable container formed in accordance with the present invention.

### DETAILED DESCRIPTION OF THE PREFERRED EMBODIMENT

The following description will describe the invention in relation to preferred embodiments of the invention, namely a portable container. The invention as defined in claims 1 and 11 is in no way limited to these preferred embodiments as they are used purely to exemplify the invention only and it is noted that variations and modifications are possible without departing from the scope of the invention. For instance, although the preferred embodiments will be described as portable containers used for loading, storing, unloading, and/or transporting rubbish and recyclable materials, this is done merely for illustrative purposes, and it is noted that the portable container may be used for loading, storing, unloading, and/or transporting any type of material.

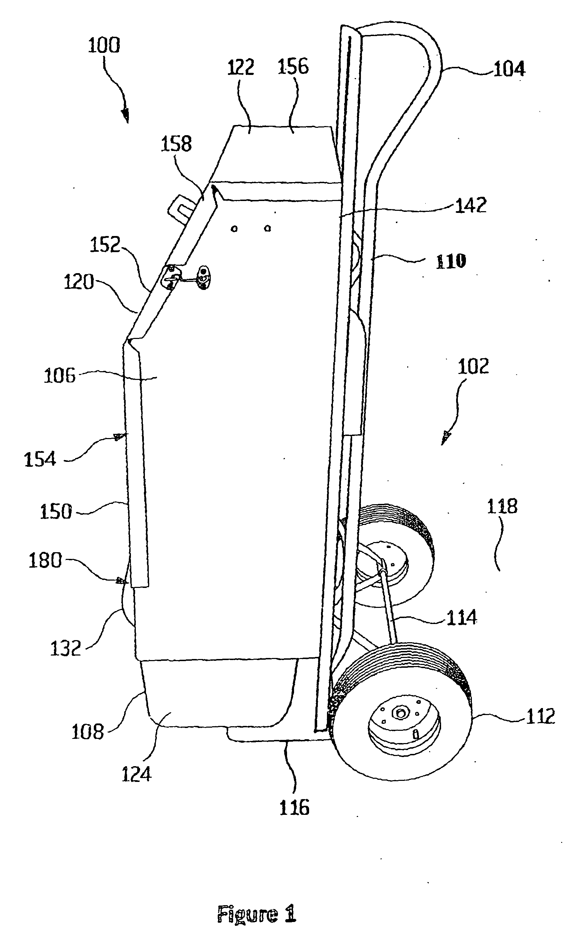

Referring to Figure 1, one embodiment of a portable container 100 formed in accordance with the present invention is illustrated and described. Generally described, the portable container 100 may be used as a container to load, store, unload, and/or transport materials, a few suitable examples being rubbish and recyclable materials. The portable container 100 may have a wheel assembly 102 and a handle 104 to permit the portable container 100 to be easily rolled upon a surface. The portable container 100 preferably includes an upper compartment 106 for holding rubbish and a lower compartment 108 for holding recyclable materials underneath the upper compartment 106. The upper compartment 106 may include a front door 120 and a top door 122.

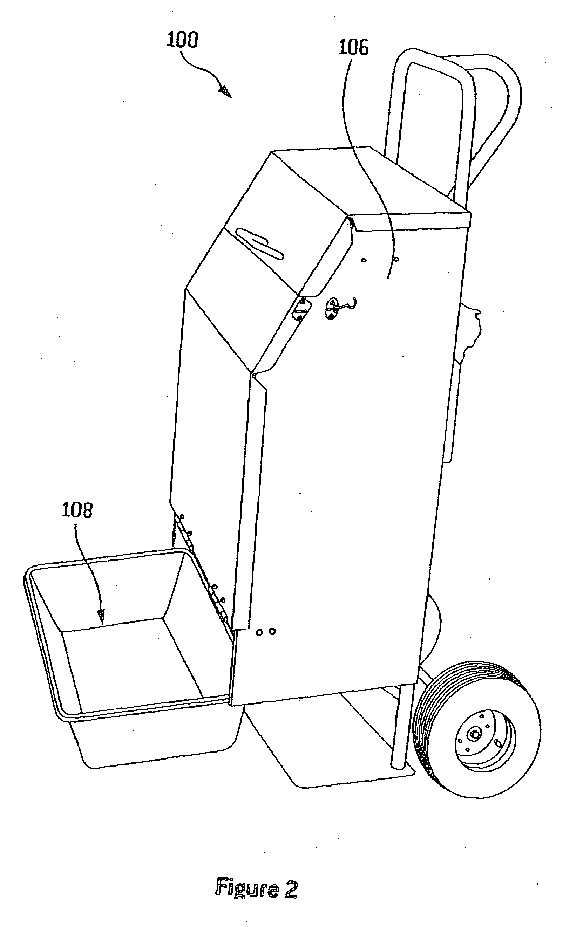

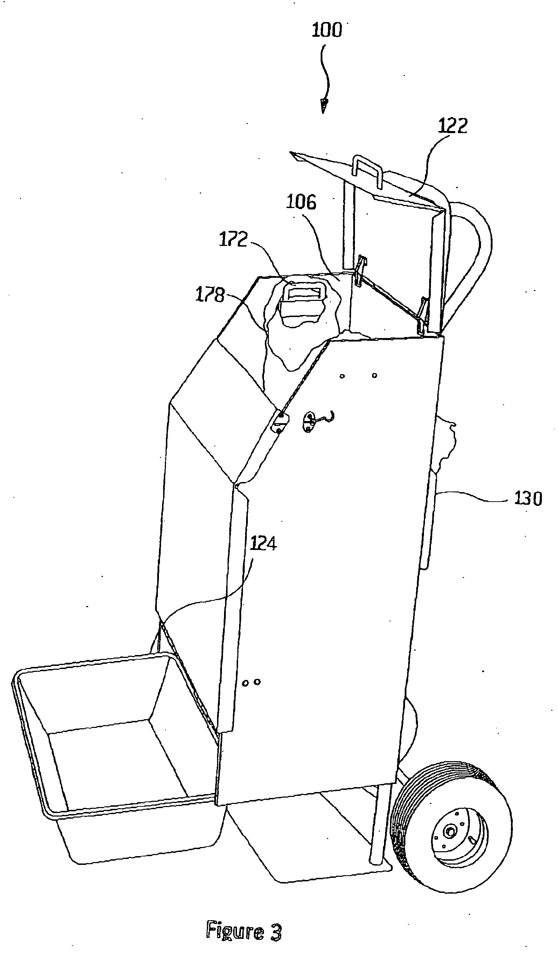

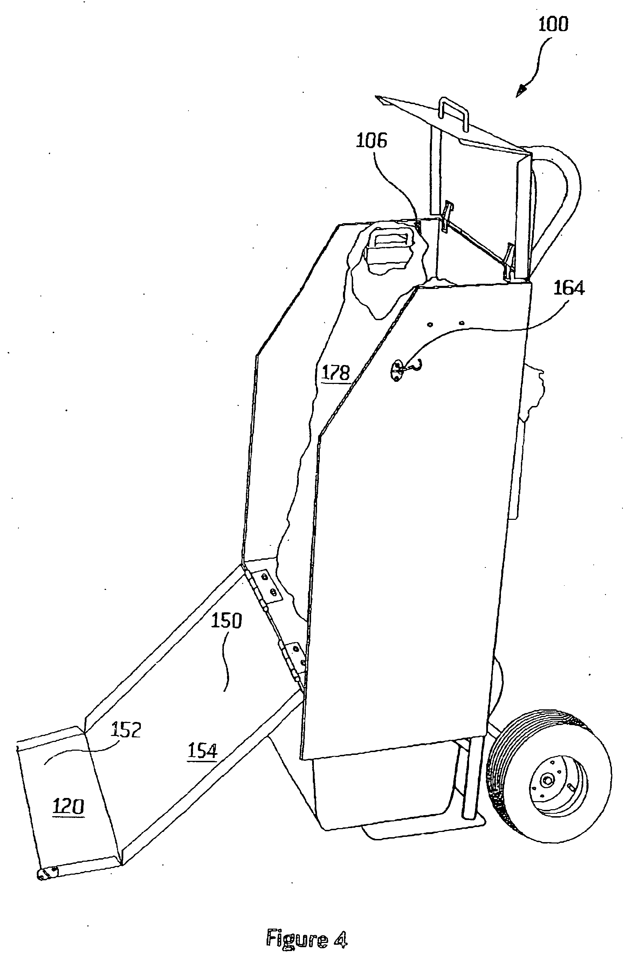

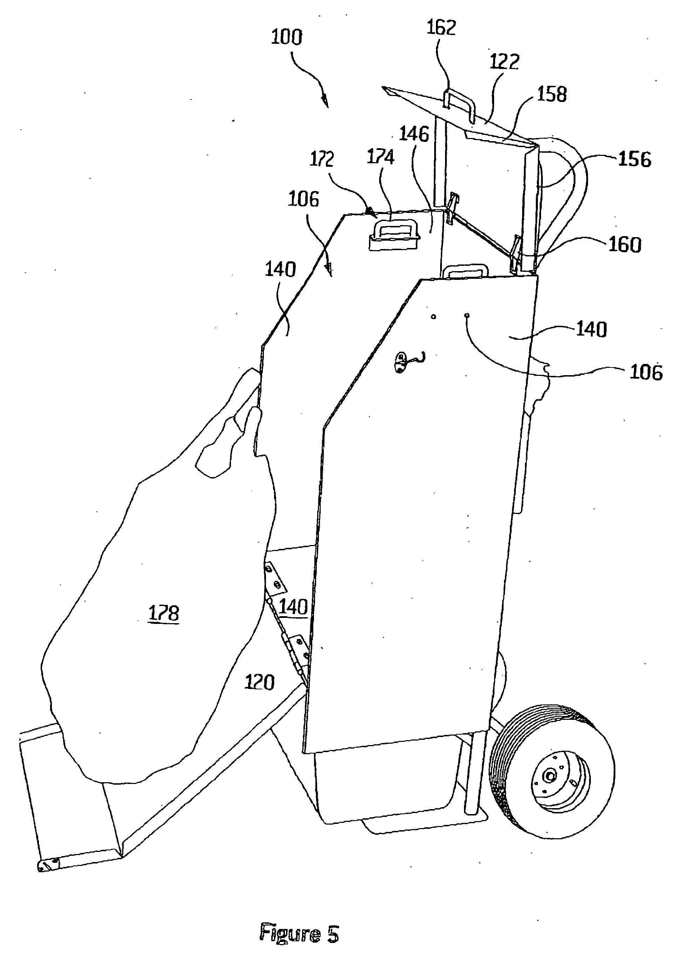

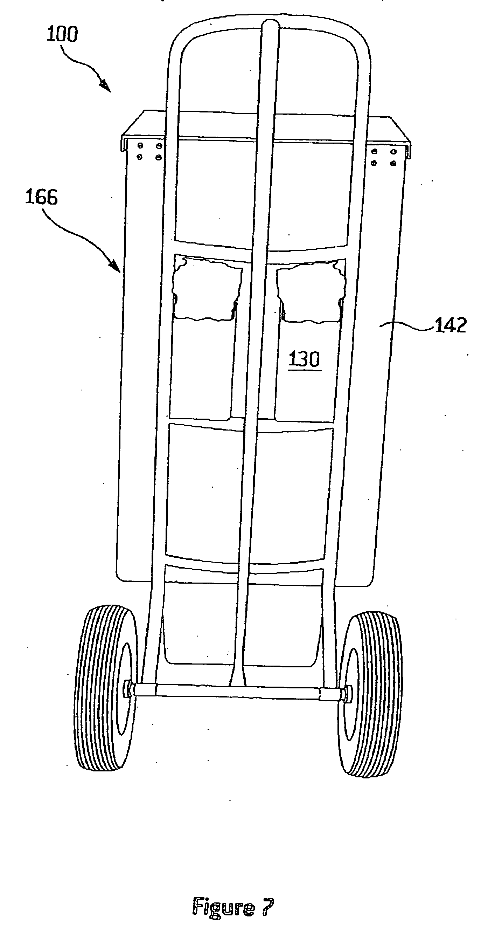

Referring to Figure 2, in use, the portable container 100 is rolled from its normal stored position out to a curb. The user then slides the lower compartment 108 out from under the upper compartment 106 and sets the lower compartment 108 full of recyclable materials upon the curb for pick up, or alternately, empties the lower compartment 108 into another container and returns the lower compartment 108 to the portable container 100. Turning to Figure 3, next the top door 122 is opened. Turning to Figure 4 a front door 120 is opened and placed into a ramp position. Turning to Figure 5, the front door 120 acts as a ramp such that the contents of the upper compartment 106 can be slid out of the portable container 100, thus alleviating the need for a user to lift the contents. Turning to Figure 7, auxiliary containers 130 may be attached to the back of the upper compartment 106 for storing spare new bags.

In light of the above general description of the portable container 100, the structure of the portable container 100 will now be described in further detail. Referring to Figure 1, the portable container 100 contains a frame 110. The frame 110 may take any suitable form for coupling the various parts of the portable container 100 together, a few suitable examples being the external frame shown, an internal frame, and/or a shell frame wherein the walls of the compartments themselves act as the frame.

The wheel assembly 102 is preferably coupled to the frame 110. The wheel assembly 102 may include a pair of wheels 112 rotatable about a common axle or separate axles. Preferably, the wheels 112 are aligned with one another such that the wheels 112 rotate about a common axis 114. Preferably, the axis 114 is oriented so as to pass transversely across the portable container, and may be located towards or at the bottom, rear portion of the portable container 100. Located as such, the portable container 100 may be rotated about the axis 114 (tilted), such that the entire portable container can be supported upon the wheels 112 which rotate about the axis 114. Preferably, the wheel assembly 102 includes only two wheels 112 for supporting the portable container 100 such that the portable container 100 can be rotated into a transport condition in which the portable container 100 is tilted and fully supported by the wheel assembly 102 for easy transport and a stowed condition (as shown in Figure 1) where the portable container 100 is in its normal, non-tilted condition, and the weight of the portable container 100 is born by a bottom 116 of the portable container 100 and only partially, or not at all, by the wheel assembly 102 such that portable container 100 is stable and resistant to movement.

Although the wheel assembly 102 is illustrated and described as having only two wheels disposed on a common axis, it is noted that this is done for illustrative purposes, and the wheel assembly 102 may include any number of wheels disposed on a single common axis, or alternatively may include any number of wheels disposed on a plurality of spaced apart and preferably parallel axes for supporting the portable container 100 fully upon wheels even when in the stowed condition. Although fixed wheels are illustrated and described, it is noted that turnable wheels are suitable for use with the present invention, such as castor style wheels.

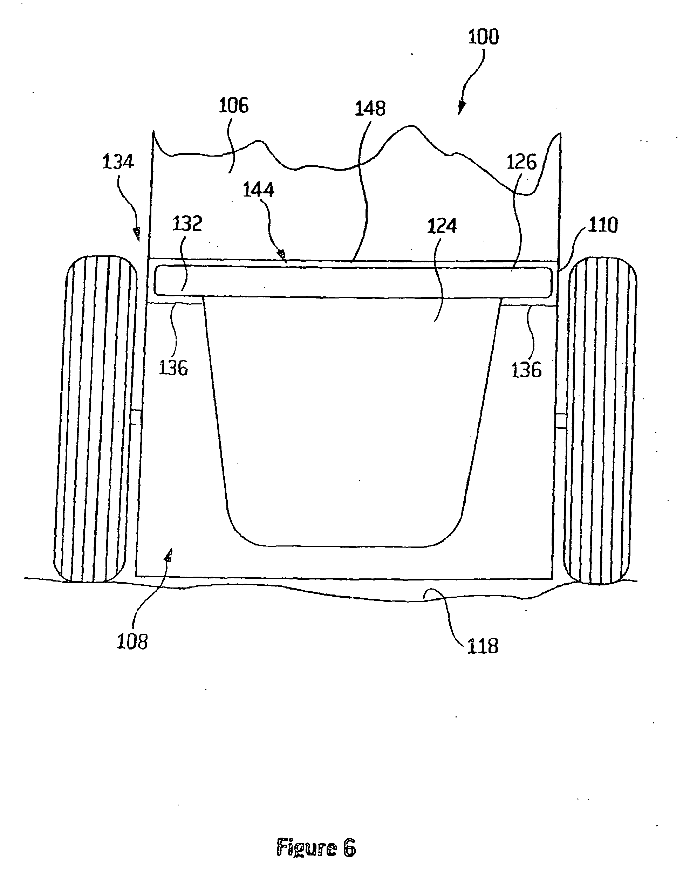

Referring to Figure 6, the lower compartment 108 is preferably a bin 124 defining a storage space 144 for holding goods. The bin 124 may have an open top 126. Disposed around a periphery of the open top 126 may be a lip 132 extending horizontally outward from the periphery. The bin 124 may be a recyclable bin provided by a government or other agency. The bin 124 is preferably suspended above a support surface 118 by a track assembly 134 coupled to the frame 110. The track assembly 134 includes a pair of opposing tracks 136 which interface with the lip 132 of the bin 124. The tracks 136 cooperate with and ride underneath the lip 132 of the bin 124 to support the bin 124 in a suspended state above the surface 118 and permit the bin 124 to be pulled horizontally outward from the portable container 100. Moreover, the bin 124 may be pulled from a stowed position, in which the bin 124 is preferably located underneath the upper compartment 106 and is attached to or supported by the portable container 100, and a detached position. In the detached position, the bin 124 is completely disengaged from the tracks 136 and detached from the portable container 100 so that it can be moved separately of the portable container 100, for instance removed to be set on the curb or lifted and dumped into a recycling truck or recycling bin. Preferably, when the bin 124 is in the stowed position, a bottom of the upper compartment 106 is disposed directly above the open top 126 of the bin 124, substantially closing off the bin 124 to impede vermin access and odour discharge.

Turning to Figure 1, preferably the bin 124 has a length that is greater than a length of the side of the portable container 100 such that the bin 124 extends outward of a front surface of the portable container 100 a predetermined distance even when the bin 124 is in the fully stowed position. The difference in length results in a gap 180 being formed between the lip 132 and the front surface of the portable container. The gap 180 permits smaller sized materials, such as glass bottles, to be inserted through the gap 180 and into the bin 124 without having to pull the bin 124 outward. Thus, it is apparent that providing the gap 180 when the bin 124 is in the stowed position enhances the ease of use of the portable container 100 since loading can occur without pulling out the bin 124. Preferably the gap 180 is greater than about 7 cm. Although the gap 180 is formed by using a bin 124 of a greater dimension than the area in which it is stowed in the illustrative embodiment, it is noted that the gap may alternatively be formed in other manners, such as by using stops to control the location of the bin when in the stowed position so as to produce the gap 180, or by instructing the user not to fully insert the bin 124.

Although the illustrated and described embodiment uses a track assembly 134 to suspend the bin 124 below the upper compartment 106, it is noted that alternately, the bin 124 may be supported from below and the track assembly 134 eliminated. For instance, the lower compartment 108 may simply be an enclosed space having a door or having an open front in which the bin 124 is inserted within, or in which the recyclable materials are directly inserted without the use of the bin.

Referring to Figure 1 and 5, the upper compartment 106 is illustrated and described as being disposed above the lower compartment 108. The upper compartment 106 includes a storage space 146 defined by a pair of side walls 140, a back wall 142 (see Figure 7), a bottom wall 148, a front door 120, and a top door 122. Preferably, the front door 120 is pivotally coupled to a forward edge of the bottom wall 148 such that the front door 120 may be transitioned from a closed position in which the front door 120 defines a boundary of the storage space 146 of the upper compartment 106 as shown in Figure 1 to a ramp position wherein the front door 120 extends between the bottom wall 148 and the ground surface 118 to assist in the unloading of goods from the upper compartment 106 as shown in Figure 5. Turning to Figure 4, although the front door 120 may be planar, preferably the front door 120 is non-planar, such as being curved or having two or more panels 150 and 152 inclined relative to one another to provide an improved ramp 154 for the transport of the contents of the upper compartment 106 down the inner surface of the front door 120 to the ground surface 118. A latch assembly 164 may be used for locking the front door 120 in the closed position.

Returning to Figure 1 and 5, preferably, the top door 122 is pivotally coupled to a top edge of the back wall 142 such that the top door 122 may be transitioned from a closed position in which the top door 122 defines a boundary of the storage space 146 of the upper compartment 106 as shown in Figure 1 to an open position wherein the top door 122 is rotated out of the way to permit access to the interior space 146 of the upper compartment 106 as shown in Figure 5. Although the top door 122 may be planar, preferably the top door 122 is non-planar, such as being curved or having two or more panels 156 and 158 inclined relative to one another such that when in the closed position, the top door 122 extends horizontally and also somewhat downward. Preferably, the top door 122 is pivotally coupled to the back wall 142 by a hinge assembly 160 adapted to hold and/or bias the top door 122 in the open position once opened and/or hold/bias the top door 122 in the closed position once in the closed position. The door 122 may include a handle 162 on its outer surface to assist a user in transitioning the top door 122 between the open and closed positions.

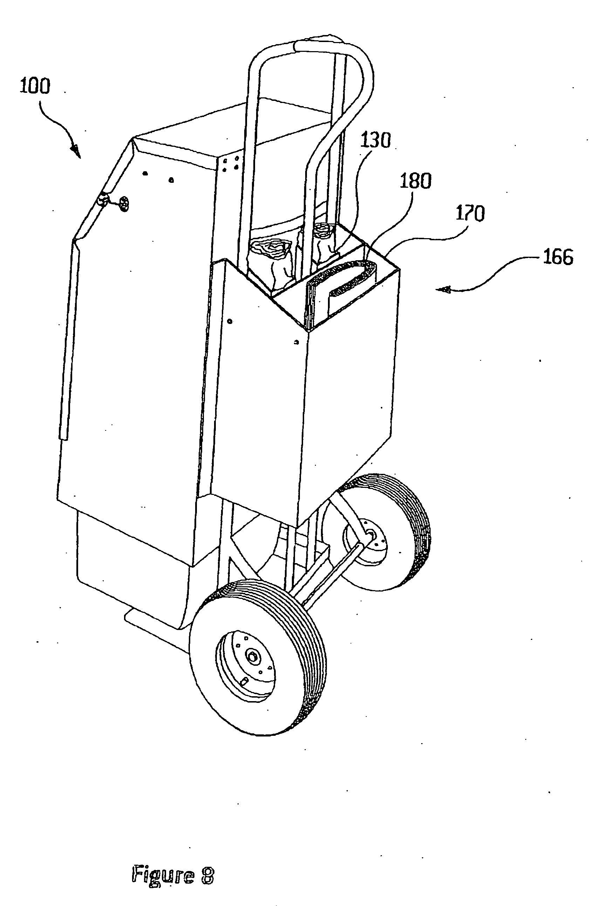

Referring to Figure 7, an auxiliary storage system 166 may be coupled to the portable container 100 in any location. However, in the illustrated embodiment, the auxiliary storage system 166 is coupled to the back wall 142. The auxiliary storage system 166 may include one or more auxiliary storage bins 130. The auxiliary storage bins 130 may be adapted to store any type of goods, a few suitable examples being rubbish bags and additional recyclable items, such as newspapers. In the portable container 100 depicted in Figure 7, the auxiliary storage system 166 includes two auxiliary storage bins 130 adapted to store extra garbage bags, while the embodiment of the portable container 100 depicted in Figure 8, the auxiliary storage system 166 includes the same two auxiliary storage bins 130, plus an additional larger sized auxiliary storage bin 170 adapted to hold used newspapers 180.

Turning to Figures 4 and 5, the portable container 100 also includes a bag hangar assembly 172. Preferably, the bag hangar assembly 172 is disposed within the space 146 defined by the upper compartment 106. The bag hanger assembly 172 may include at least a first catch 174 disposed on the left side wall 140 near a top of the wall and a second catch (not shown, but identical to the first catch 174) disposed on the right side wall 140. The first and second catches are each adapted to engage and support a handle of a bag 178 to hold the bag 178 in an open position in the upper compartment 106. The catches 174 may be shaped and sized in any manner suitable for removably holding one of the handles of the bag 178, and are not limited to the handle shaped catches 174 illustrated and herein described, and may include other structures, a few suitable examples being hooks and clamps.

Turning to Figure 1 and 3, in light of the above description of the structure of the portable container 100, the operation of the portable container 100 will now be described. Typically use begins with opening the top door 122, removing a spare garbage bag stored in one of the auxiliary storage containers 130, and hanging the bag 178 within the upper compartment 106 via the bag hangar assembly 172. The top door 122 is open and closed as required as rubbish is deposited in the bag 178 in the upper compartment 106. Newspapers 180 (See Figure 8) are stored in the auxiliary storage system 166 and recyclable materials are deposited in the bin 124 of the lower compartment 108, which may be inserted through the gap 180 (See Figure 1), pulled out each time an item is added and restowed, or alternatively, pulled out, detached, and left out until the portable container 100 is moved. Once the portable container 100 is full, or as required such as by scheduled pickups, the portable container 100 is tilted back on the wheels 112 of the wheel assembly 102 and brought out to the curb. The bin 124 is removed from the lower compartment and set on the curb for pickup. The top door 122 is opened, and then the front door 120 is opened and placed in the ramp position as shown in Figure 4. The garbage bag 178 is then removed from the hangar assembly 172 and slid down the ramp 154 to the curb as shown in Figure 5. Turning to Figure 1, the doors 120 and 122 are closed, the bin 124 returned to its stowed position within the lower compartment 108, and the portable container 100 returned to its position within the house or garage.

### STATEMENT OF THE TECHNICAL ADVANTAGES

An embodiment of a portable container formed in accordance with the present invention may have one or more of the following advantages:
a) mobile;
b) easy to use;
c) vermin resistant;
d) smell resistant (since substantially fully encloses the rubbish);
e) no lifting required to unload upper compartment (contents may be slid down a ramp);
f) easy to load and unload lower compartment;
g) provides for storage of spare new bags;
h) provides for storage of newspapers;
i) space saving (since rubbish is stored on top of, not to the side of the recyclable bin); and
j) can be used for loading, storing, and unloading many types of objects.

### VARIATIONS

Throughout the description of this specification, the word "comprise" and variations of that word such as "comprising" and "comprises", are not intended to exclude other additives, components, integers or steps.

It will of course be realised that while the foregoing has been given by way of illustrative example of this invention, the invention should not be limited to this example, but is defined by the claims.

## Claims

1. A portable container (100) comprising:
(a) a frame (110);
(b) a lower compartment (108) defining a first space adapted to store objects; and
(c) an upper compartment (106) disposed above the lower compartment (108) and defining a second space adapted to store objects, the upper compartment (106) having a door (120) moveable between a closed position in which the door (120) defines a boundary of the second space and an open position in which the door (120) is adapted to be a ramp extending from the upper compartment (106) to the surface to permit objects stored in the upper compartment (106) to be slid down the ramp to the surface, wherein the lower compartment (108) is removably coupled to the frame (120),
(d) a wheel assembly (112, 114) for supporting the frame (120) upon a surface to permit the frame (120) to be rolled upon the surface.

2. The portable container (100) of Claim 1 wherein the frame (120) comprises one of: an internal frame, an external frame, or a shell frame wherein the walls of the compartments themselves act as the frame.

3. The portable container (100) of Claim 1, further comprising a track assembly for removably coupling the lower compartment (108) to the frame, the track assembly permitting the lower compartment to be slid outward from a stowed position in which the lower compartment (108) is disposed underneath the upper compartment (106) to a detached position in which the lower compartment is detached from the frame (120) and moveable separately from the frame.

4. The portable container (100) of Claim 3, wherein the track assembly includes a support track (136), and wherein the lower compartment (108) includes a bin (124) having an open top with a lip (132) projecting outward from a periphery of the open top, wherein the lip is adapted to slidably interface with the support track (136) during transition of the lower compartment from the stowed position to the detached position.

5. The portable container (100) of Claim 1, wherein the upper compartment (106) further includes a second door (122) moveable between a closed position in which the second door defines a boundary of the second space and an open position permitting access to the second space.

6. The portable container (100) of Claim 1, wherein the first door (120) is pivotally coupled to the upper compartment.

7. The portable container (100) of Claim 1, wherein the upper compartment includes a bag hanger assembly (172) disposed within the second space, the bag hanger assembly including at least a first catch (174) spaced from a second catch, the first and second catches each adapted to engage and support a handle of a bag to hold the bag in an open position in the second space.

8. The portable container (100) of Claim 1, further comprising an auxiliary storage compartment (130) coupled to the frame, the auxiliary storage compartment defining a third space for storing goods.

9. The portable container (100) of Claim 1, wherein the lower compartment (108) is a bin (124) having an open top, and wherein a bottom of the upper compartment (106) is adapted to be disposed over the open top to block access to the lower compartment through the open top.

10. The portable container (100) of Claim 1, wherein the lower compartment (108) is a bin (124) having an open top, wherein the bin is positionable between a detached position and a stowed position, and wherein when the bin (124) is in the stowed position, a portion of the open top extends outward of a front surface of the portable container thereby forming a gap permitting objects to be inserted through the gap and into the bin.

11. A portable container (100) comprising:
(a) a main compartment (106);
(b) a bin (124) removably disposed below the main storage space;
(c) a wheel assembly having one or more wheels (112) for rollingly supporting the main compartment (106) upon a ground surface; and
(d) a door (120) positionable between a closed position forming a wall of the main compartment (106) and a ramp position adapted to provide a ramp extending from a bottom surface of the main compartment (106) to the ground surface, the ramp adapted to permit contents of the main compartment to be slid down the ramp from a bottom surface of the main compartment (106) to the ground surface.

## Patentansprüche

1. Tragbarer Behälter (100), der aufweist:
(a) einen Rahmen (110);
(b) eine untere Kammer (108), die einen ersten Raum definiert, der für das Aufbewahren von Gegenständen ausgebildet ist; und
(c) eine obere Kammer (106), die über der unteren Kammer (108) angeordnet ist und einen zweiten Raum definiert, der für das Aufbewahren von Gegenständen ausgebildet ist, wobei die obere Kammer (106) eine Tür (120) aufweist, die zwischen einer geschlossenen Position, in der die Tür (120) eine Begrenzung des zweiten Raumes definiert, und einer offenen Position beweglich ist, in der die Tür (120) so ausgebildet ist, dass sie eine Abschrägung ist, die sich von der oberen Kammer (106) zur Oberfläche erstreckt, damit die in der oberen Kammer (106) aufbewahrten Gegenstände die Abschrägung nach unten zur Oberfläche gleiten können, wobei die untere Kammer (108) entfernbar mit dem Rahmen (120) verbunden ist;
(d) eine Radbaugruppe (112, 114) für das Tragen des Rahmens (120) auf einer Oberfläche, damit der Rahmen (120) auf der Oberfläche gerollt werden kann.

2. Tragbarer Behälter (100) nach Anspruch 1, bei dem der Rahmen (120) einen der folgenden aufweist: einen inneren Rahmen; einen äußeren Rahmen; oder einen Gehäuserahmen, bei dem die Wände der Kammern sich selbst als der Rahmen verhalten.

3. Tragbarer Behälter (100) nach Anspruch 1, der außerdem eine Führungsbaugruppe für das entfernbare Verbinden der unteren Kammer (108) mit dem Rahmen aufweist, wobei die Führungsbaugruppe gestattet, dass die untere Kammer aus der Verstauposition, in der die untere Kammer (108) unterhalb der oberen Kammer (106) angeordnet ist, nach außen in eine Ablöseposition verschoben werden kann, in der die untere Kammer vom Rahmen (120) abgelöst wird und separat vom Rahmen beweglich ist.

4. Tragbarer Behälter (100) nach Anspruch 3, bei dem die Führungsbaugruppe eine Halterungsführung (136) umfasst, und bei dem die untere Kammer (108) einen Kasten (124) mit einer offenen Oberseite mit einem Ansatz (132) umfasst, der von einem Umfang der offenen Oberseite nach außen vorsteht, wobei der Ansatz so ausgebildet ist, dass er sich verschiebbar mit der Halterungsführung (136) während des Überganges der unteren Kammer aus der Verstauposition in die Ablöseposition verbindet.

5. Tragbarer Behälter (100) nach Anspruch 1, bei dem die obere Kammer (106) außerdem eine zweite Tür (122) umfasst, die zwischen einer geschlossenen Position, in der die zweite Tür eine Begrenzung des zweiten Raumes definiert, und einer offenen Position beweglich ist, die einen Zugang zum zweiten Raum gestattet.

6. Tragbarer Behälter (100) nach Anspruch 1, bei dem die erste Tür (120) drehbar mit der oberen Kammer verbunden ist.

7. Tragbarer Behälter (100) nach Anspruch 1, bei dem die obere Kammer eine Sackaufhängebaugruppe (172) umfasst, die innerhalb des zweiten Raumes angeordnet ist, wobei die Sackaufhängebaugruppe mindestens eine erste Sperre (174) umfasst, die von einer zweiten Sperre beabstandet ist, wobei die erste und die zweite Sperre jeweils so ausgebildet sind, dass sie mit einem Griff eines Sackes in Eingriff kommen und ihn tragen, um den Sack in einer offenen Position im zweiten Raum zu halten.

8. Tragbarer Behälter (100) nach Anspruch 1, der außerdem eine Hilfsaufbewahrungskammer (130) in Verbindung mit dem Rahmen aufweist, wobei die Hilfsaufbewahrungskammer einen dritten Raum für das Aufbewahren von Gütern definiert.

9. Tragbarer Behälter (100) nach Anspruch 1, bei dem die untere Kammer (108) ein Kasten (124) mit einer offenen Oberseite ist, und wobei ein Boden der oberen Kammer (106) so ausgebildet ist, dass er über der offenen Oberseite angeordnet ist, um einen Zugang zur unteren Kammer durch die offene Oberseite zu versperren.

10. Tragbarer Behälter (100) nach Anspruch 1, bei dem die untere Kammer (108) ein Kasten (124) mit einer offenen Oberseite ist, wobei der Kasten zwischen einer Ablöseposition und einer Verstauposition positionierbar ist, und wobei sich, wenn sich der Kasten (124) in der Verstauposition befindet, ein Abschnitt der offenen Oberseite nach außen von einer Vorderfläche des tragbaren Behälters erstreckt, wodurch ein Spalt gebildet wird, der das Einbringen von Gegenständen durch den Spalt und in den Kasten hinein gestattet.

11. Tragbarer Behälter (100), der aufweist:
(a) eine Hauptkammer (106);
(b) einen Kasten (124), der entfernbar unterhalb des Hauptaufbewahrungsraumes angeordnet ist;
(c) eine Radbaugruppe mit einem oder mehreren Rädern (112) für das rollende Tragen der Hauptkammer (106) auf einer Erdbodenoberfläche; und
(d) eine Tür (120), die zwischen einer geschlossenen Position, die eine Wand der Hauptkammer (106) bildet, und einer Abschrägungsposition positionierbar ist, die ausgebildet ist, um eine Abschrägung zu liefern, die sich von einer Bodenfläche der Hauptkammer (106) zur Erdbodenoberfläche erstreckt, wobei die Abschrägung so ausgebildet ist, dass der Inhalt der Hauptkammer auf der Abschrägung nach unten von einer Bodenfläche der Hauptkammer (106) zur Erdbodenoberfläche gleiten kann.

## Revendications

1. Conteneur portable (100), comprenant:
(a) un cadre (110);
(b) un compartiment inférieur (108), définissant un premier espace adapté pour stocker des objets; et
(c) un compartiment supérieur (106), agencé au-dessus du compartiment inférieur (108) et définissant un deuxième espace adapté pour stocker des objets, le compartiment supérieur (106) comportant une porte (120) pouvant être déplacée entre une position fermée, dans laquelle la porte (120) définit une limite du deuxième espace, et une position ouverte, dans laquelle la porte (120) est adaptée pour constituer une rampe s'étendant du compartiment supérieur (106) vers la surface, pour permettre le glissement des objets stockés dans le compartiment supérieur (106) le long de la rampe vers la surface, le compartiment inférieur (108) étant accouplé de manière amovible au cadre (120);
(d) un assemblage de roues (112, 114) pour supporter le cadre (120) sur une surface, pour permettre le roulement du cadre (120) sur la surface.

2. Conteneur portable (100) selon la revendication 1, dans lequel le cadre (120) comprend un des cadres ci-dessous : un cadre interne, un cadre externe, un cadre de coque, dans lequel les parois des compartiments servent elles-mêmes de cadre.

3. Conteneur portable (100) selon la revendication 1, comprenant en outre un assemblage de glissière pour accoupler de manière amovible le compartiment inférieur (108) au cadre, l'assemblage de glissière permettant le glissement du compartiment inférieur vers l'extérieur de la position de rangement, dans laquelle le compartiment inférieur (108) est agencé au-dessous du compartiment supérieur (106), vers une position détachée, dans laquelle le compartiment inférieur est détaché du cadre (120) et peut être déplacé de manière séparée du cadre.

4. Conteneur portable (100) selon la revendication 3, dans lequel l'assemblage de glissière englobe un glissière de support (136), le compartiment inférieur (108) englobant un bac (124), comportant une partie supérieure ouverte avec un rebord (132) débordant vers l'extérieur d'une périphérie de la partie supérieure ouverte, le rebord étant adapté pour se connecter de façon coulissante avec la glissière de support (136) au cours de la transition du compartiment inférieur de la position de rangement vers la position détachée.

5. Conteneur portable (100) selon la revendication 1, dans lequel le compartiment supérieur (106) englobe en outre une deuxième porte (122), pouvant être déplacée entre une position fermée, dans laquelle la deuxième porte définit une limite du deuxième espace, et une position ouverte, donnant accès au deuxième espace.

6. Conteneur portable (100) selon la revendication 1, dans lequel la première porte (120) est accouplée de manière pivotante au compartiment supérieur.

7. Conteneur portable (100) selon la revendication 1, dans lequel le compartiment supérieur englobe un assemblage de suspension de sacs (172), agencé dans le deuxième espace, l'assemblage de suspension de sacs englobant au moins un premier cliquet (174) espacé d'un deuxième cliquet, les premier et deuxième cliquets étant chacun adaptés pour s'engager dans une poignée d'un sac et supporter celui-ci, pour maintenir le sac dans une position ouverte dans le deuxième espace.

8. Conteneur portable (100) selon la revendication 1, comprenant en outre un compartiment de stockage auxiliaire (130) accouplé au cadre, le compartiment de stockage auxiliaire définissant un troisième espace pour stocker des objets.

9. Conteneur portable (100) selon la revendication 1, dans lequel le compartiment inférieur (108) est un bac (124), comportant une partie supérieure ouverte, une partie inférieure du compartiment supérieur (106) étant adaptée pour être placée au-dessus de la partie supérieure ouverte pour bloquer l'accès au compartiment inférieur à travers la partie supérieure ouverte.

10. Conteneur portable (100) selon la revendication 1, dans lequel le compartiment inférieur (108) est un bac (124) comportant une partie supérieure ouverte, le bac pouvant être positionné entre une position détachée et une position de rangement, et dans lequel, lorsque le bac (124) se trouve dans la position de rangement, une partie de la partie supérieure ouverte s'étend vers l'extérieur d'une surface frontale du conteneur portable, formant ainsi un espace permettant l'insertion d'objets à travers l'espace et dans le bac.

11. Conteneur portable (100), comprenant:
(a) un compartiment principal (106);
(b) un bac (124) agencé de manière amovible au-dessous de l'espace de stockage principal;
(c) un assemblage de roues, comportant une ou plusieurs roues (112) pour supporter le compartiment principal (106) en vue de son roulement sur une surface du sol; et
(d) une porte (120), pouvant être positionnée entre une position fermée, formant une paroi du compartiment principal (106), et une position de rampe, adaptée pour établir une rampe s'étendant d'une surface inférieure du compartiment principal (106) vers la surface du sol, la rampe étant adaptée pour permettre le glissement vers le bas du contenu du compartiment principal le long de la rampe, d'une surface inférieure du compartiment principal (106) vers la surface du sol.
